# EUROPÄISCHE PATENTSCHRIFT

(11) **EP 4 336 234 B1**
(45) Veröffentlichungstag und Bekanntmachung des Hinweises auf die Patenterteilung: **06.11.2024**
(21) Anmeldenummer: 22194363.2
(22) Anmeldetag: 07.09.2022
(51) Int. Cl.: G02B 6/44, G02B 6/255, G02B 6/38

(54) **ABLAGEEINRICHTUNG FÜR SPLEISSSCHUTZVORRICHTUNGEN ZWEIER VERSCHIEDENER QUERSCHNITTE**
STORAGE DEVICE FOR SPLICE PROTECTION DEVICES OF TWO DIFFERENT CROSS-SECTIONS
DISPOSITIF DE STOCKAGE POUR DISPOSITIFS DE PROTECTION DES ÉPISSURES DE DEUX SECTIONS TRANSVERSALES DIFFÉRENTES

(43) Veröffentlichungstag der Anmeldung: 13.03.2024
(73) Patentinhaber: Hauff-Technik GRIDCOM GmbH, 73494 Rosenberg (DE)
(72) Erfinder: Himmelsbach, Daniel, 70192 Stuttgart (DE)
(74) Vertreter: König Szynka Tilmann von Renesse Patentanwälte Partnerschaft mbB München

(56) Entgegenhaltungen:
- WO-A1-2009/091457
- WO-A1-2020/245335
- US-A1- 2016 109 674

## Beschreibung

Die vorliegende Erfindung bezieht sich auf den Umgang mit Lichtleiterfasern. Konkret geht es um eine Vorrichtung, in der mindestens eine Spleißstelle abgelegt werden kann.

Spleißstellen sind Verbindungsstellen zwischen Lichtleiterfaserenden, die ein Lichtsignal von einer in die andere Faser übergehen lassen und daher präzise gefertigt sein müssen. Es ist an sich bekannt, dass solche Spleißstelle in einer geschützten und auch organisatorisch übersichtlichen Weise an hierfür vorgesehenen Plätzen "abgelegt" werden, also dauerhaft und lokalisiert gelagert und fixiert werden. Vorrichtungen hierfür werden Spleißschutzhalter oder Ablageeinrichtung genannt.

Nach der Verbindung zweier Lichtleiterfasern mittels Spleißen ist die Verbindungsstelle zunächst fragil und muss insbesondere gegen eine Biegung der Kabelenden zueinander geschützt werden. Vorbekannt sind hierfür verschiedene Arten an Spleißschutzvorrichtungen, insbesondere die Umhüllung mit einem durch einen Metallstift verstärkten Schrumpfschlauch, welcher sich unter Wärmeeinfluss um die Verbindungsstelle verengt, sowie die Umhüllung der Verbindungsstelle durch einen Crimpspleißschutz, also ein langgestreckter Metallrahmen, welcher durch einen Kaltumformprozess um die Verbindungsstelle herum gebogen wird. Erst nach der Montage eines solchen umhüllenden Schutzes wird eine solche Spleißstelle dauerhaft gelagert. Spricht man also von einer Ablageeinrichtung für Spleißstellen, so meint man grundsätzlich eine Ablageeinrichtung für eine Spleißschutzvorrichtung. Verschiedene Spleißschutzvorrichtungen weisen unterschiedliche Querschnitte normal zur Faserrichtung auf.

Vorbekannt sind Ablageeinrichtungen für eine bestimmte Art von Spleißschutzvorrichtung. Vorbekannt sind auch übergeordnete Lichtleiterfasermanagementvorrichtungen, z. B. sogenannte Spleißkassetten oder Gehäuse, die eine Ablageeinrichtung und in der unmittelbaren Umgebung eine Vorrichtung zur Ablage von Kabelüberlängen aufweisen. Häufig ist die Ablageeinrichtung für Spleißschutzvorrichtungen als auswechselbares Teil gestaltet. Je nach abzulegender Spleißschutzvorrichtung muss eine dazu passende Ablageeinrichtung eingesetzt werden. Entsprechend müssen für bekannte Vorrichtungen oft verschiedene Ablageeinrichtungen bevorratet werden.

Der Oberbegriff des Anspruchs 1 beruht auf dem Stand der Technik WO 2009/091457 A1. Dort geht es um die Kombination von Ablageeinrichtungen für Spleißschutzvorrichtungen mit solchen für andere passive optische Bauteile. Dabei können nebeneinanderliegende Ablagevorrichtungen für Spleißschutzvorrichtungen unterschiedlich gestaltet sein, um unterschiedliche Typen von Spleißschutzvorrichtungen zu halten. Zum Stand der Technik wird ferner verwiesen auf die US 2016/0109674 A1. Diese zeigt nebeneinanderliegende und zueinander identische Ablagen für Spleißschutzvorrichtungen mit ausschließlich kreisrundem Querschnitt. Je nach Durchmesser können unterschiedlich große Spleißschutzvorrichtungen in unterschiedlichen Ebenen gehalten werden.

Der Erfindung liegt die Aufgabe zugrunde, eine Ablageeinrichtung anzugeben, welche hinsichtlich der abzulegenden Spleißschutzvorrichtungen verbesserte Nutzungsmöglichkeiten ermöglicht.

Hierzu richtet sich die Erfindung auf eine Ablageeinrichtung nach Anspruch 1 zur Ablage von Spleißschutzvorrichtungen für Lichtleiterfasern, wofür die Ablageeinrichtung eine Mehrzahl Spleißschutzhalter aufweist. Ein Spleißschutzhalter ist demnach eine Vorrichtung zur Aufnahme einer einzelnen Spleißschutzvorrichtung. Die Ablageeinrichtung weist hierbei erste Spleißschutzhalter auf, welche wiederum zwei erste Wandabschnitte mit planen, zueinander parallel stehenden Innenseiten aufweisen. Mit Wandabschnitte sind hierbei dreidimensionale, mindestens einseitig gehaltene Elemente gemeint, welche bevorzugt zumindest zwei parallele Seiten aufweisen, nämlich eine Innenseite und eine Außenseite. Hierbei ist mit Innenseite diejenige Seite eines Wandabschnittes gemeint, welche einem Innenraum für die Spleißschutzvorrichtung zugewandt ist.

Planheit einer Fläche meint hier, dass sich die Fläche zwischen zwei mathematisch parallelen Ebenen befindet, die sich in einem Abstand von maximal 0,2 mm, 0,15 mm, 0,1 mm oder 0,05 mm befinden. Parallelität zweier Flächen meint hier, dass die beiden Flächen eine Winkelabweichung von maximal 10°, 7,5°, 5°, 4° oder 3° aufweisen (die Werte sind jeweils in der Reihenfolge zunehmend bevorzugt).

Die Ablageeinrichtung verfügt zudem auch über zweite Spleißschutzhalter mit zweiten Wandabschnitten mit zueinander geneigten Innenseiten, welche bevorzugt wiederum in sich plan sind. Zueinander geneigt bedeutet, dass die Innenseiten der zweiten Wandabschnitte relativ zueinander eine unterschiedliche räumliche Ausrichtung aufweisen, sich jeweils eine ihrer Hauptdimensionen also in unterschiedliche Raumrichtungen erstreckt. Bevorzugt weisen die Innenseiten der zweiten Wandabschnitte auch jeweils gegenüber der vertikalen und der horizontalen Richtung eine relative Neigung auf.

Mit vertikaler Richtung ist diejenige lokale Richtung gemeint, welche parallel zu den Innenseiten der ersten Wandabschnitte und senkrecht zu einer Faserrichtung einer Spleißschutzvorrichtung steht, für deren Ablage die Ablageeinrichtung ausgelegt ist. Die vertikale Richtung ist auch mit einem Richtungssinn versehen. Mit negativer vertikaler Richtung ist die Richtung gemeint, in der eine Spleißschutzvorrichtung in die Ablageeinrichtung hinein abgelegt werden kann. Bezogen auf eine Orientierung gemäß einem typischen Anwendungsfall, bei der die Ablageeinrichtung gebrauchsbereit auf einem Untergrund liegt, weist die vertikale Richtung nach oben.

Die horizontale Richtung ist diejenige lokale Richtung, welche senkrecht zu den Innenseiten der ersten Wandabschnitte steht.

Mit Faserrichtung ist diejenige Richtung gemeint, entlang der eine Faser innerhalb einer Spleißschutzvorrichtung verläuft, für deren Ablage die Ablageeinrichtung ausgelegt ist.

Die so gestaltete Ablageeinrichtung kombiniert Spleißschutzhalter verschiedener Querschnitte in einer einzigen Ablageeinrichtung. Damit können Spleißschutzvorrichtungen abgelegt werden, die verschiedene Querschnitte aufweisen und insbesondere durch verschiedene Verfahren um eine Spleißstelle montiert wurden. Da es bezüglich der Spleißschutzvorrichtungstypen länderspezifische Unterschiede gibt, müssen aktuell häufig Spleißkassetten, die international vertrieben werden sollen, mit auswechselbaren Spleißstellenablagen ausgestattet sein. Diese sind jeweils für einen bestimmten Spleißschutzvorrichtungstyp ausgelegt und können somit je nach Land ausgewählt werden. Die vorliegende Erfindung ermöglicht es dagegen, die Ablageeinrichtung unter Vermeidung länderspezifischer Anpassungen einzusetzen. Zudem kann die gesamte Logistikkette, von der Produktion der Formteile, über Transport und Vertrieb der Ablageeinrichtung bis hin zur Verwendung am Einsatzort, schlanker, kostengünstiger und effizienter gestaltet werden. Auch lassen sich durch die Erübrigung ungenutzter Auswechselteile der Materialverbrauch und die Abfallproduktion senken.

Erfindungsgemäß schließen die zweiten Wandabschnitte an erste Wandabschnitte an. Dies erfolgt mit einem Ende, welches in die negative vertikale Richtung weist. Das bedeutet, dass die zweiten Spleißschutzhalter bevorzugt in positiver vertikaler Richtung zu den ersten Spleißschutzhaltern angeordnet sind. Bevorzugt sind die zweiten Wandabschnitte hierbei einstückig mit den ersten Wandabschnitten verbunden.

Dabei teilen sich die zweiten Wandabschnitte restlos in genau zwei Gruppen auf. Zweite Wandabschnitte der ersten Gruppe sind relativ zu zweiten Wandabschnitten der zweiten Gruppe geneigt. Die beiden Gruppen der zweiten Wandabschnitte sind dabei so angeordnet, dass jeder der zweiten Spleißschutzhalter zumindest ein Mitglied beider Gruppen aufweist. Auf diese Weise sorgen die unterschiedlichen Neigungen der beiden Gruppen für eine besonders sichere Ablage der Spleißschutzvorrichtungen im Sinne eines Formschlusses. Bevorzugt weist jeder der zweiten Spleißschutzhalter je zwei Mitglieder der ersten Gruppe und der zweiten Gruppe auf. Durch diese Lagerung an vier Wandabschnitten kann eine abgelegte Spleißschutzvorrichtung vollständig und effizient fixiert werden. Zur Veranschaulichung wird auf das Ausführungsbeispiel verwiesen. Alternativ könnten z. B. auch die beiden in der Faserrichtung näher beieinanderliegenden Mitglieder der einen Gruppe (des Ausführungsbeispiels) zusammengefasst werden zu einem einzigen zweiten Wandabschnitt, womit es dann insgesamt drei Wandabschnitte pro Spleißschutzvorrichtung geben würde. Alternativ könnten sich auch z. B. zwei Wandabschnitte, je einer aus jeder Gruppe, gegenüber liegen.

Bei einer erfindungsgemäßen Ablageeinrichtung sind die ersten Spleißschutzhalter dafür ausgelegt, dass in ihnen solche Spleißschutzvorrichtungen abgelegt werden können, welche in einem Querschnitt normal zur Faserrichtung parallel (im obigen Sinn) zueinander stehende Außenseiten aufweisen. Praktisch relevant ist eine Querschnittsform, bei der lediglich diejenigen Außenseiten parallel zueinander stehen, welche im abgelegten Zustand in Kontakt mit den ersten Wandabschnitten sind. Es sind jedoch auch Querschnitte denkbar, bei denen alle gegenüberliegenden Seiten parallel zueinander ausgerichtet sind, bspw. rechteckige Querschnitte. Denkbar sind weiterhin Querschnitte mit abgerundeten Ecken oder mit einer Fase.

Weiterhin sind die zweiten Spleißschutzhalter für die Aufnahme von zweiten Spleißschutzvorrichtungen ausgelegt, welche einen runden Querschnitt aufweisen. Mit einem runden Querschnitt ist hierbei nicht zwangsläufig ein kreisförmiger Querschnitt gemeint, obwohl dies besonders bevorzugt ist. Denkbar ist jedoch auch ein elliptischer, ovaler oder anderweitig verzerrt runder Querschnitt.

Bei dieser Ablageeinrichtung sind die ersten und zweiten Spleißschutzhalter durch eine entsprechende Ausgestaltung der ersten Wandabschnitte mit parallel zueinander stehenden Innenseiten bzw. durch die zweiten Wandabschnitte mit zueinander geneigten Innenseiten auf genau solche Spleißschutzvorrichtungen spezialisiert, welche entweder einen Querschnitt mit zueinander parallelen Außenseiten oder einen runden Querschnitt aufweisen. Auf diese Weise können in dieselbe Ablageeinrichtung also Spleißschutzvorrichtungen mit unterschiedlicher Querschnittsform abgelegt werden.

Gemäß einer bevorzugten Ausführungsform erstrecken sich alle Wandabschnitte entlang der Faserrichtung. Das bedeutet, dass die Richtung der längsten Erstreckung der Wandabschnitte parallel zu der Faserrichtung ausgerichtet ist. Mit Parallelität zweier Richtungen ist hier gemeint, dass sich beide Richtungen um einen Raumwinkel von maximal 10°, 5°, 3°, 2° oder 1° unterscheiden. Bevorzugt weist jeder der ersten Spleißschutzhalter in einem Querschnitt quer zur Faserrichtung jeweils zwei der ersten Wandabschnitte sowie einen diese verbindenden Bodenabschnitt auf.

Dabei müssen einzelne erste Wandabschnitte nicht zwangsläufig ausschließlich Teil des Querschnittes nur eines der ersten Spleißschutzhalter sein. Es ist auch denkbar und sogar bevorzugt, dass einzelne erste Wandabschnitte Teil des Querschnittes von mehreren, insbesondere zwei ersten Spleißschutzhaltern sind, dass also benachbarte erste Spleißschutzhalter einen ersten Wandabschnitte gemeinsam nutzen, um ihren Querschnitt zu definieren. Dies ermöglicht eine besonders platzsparende Anordnung der Spleißschutzvorrichtungen. Bevorzugt ist der Bodenabschnitt plan ausgeführt. Besonders bevorzugt steht der Bodenabschnitt dabei senkrecht zu den ersten Wandabschnitten, er könnte jedoch auch geneigt zu ihnen angeordnet sein. Es sind jedoch auch andere Formen denkbar, beispielsweise könnte der Bodenabschnitt gewölbt sein, insbesondere konkav gewölbt.

Betrachtet man eine Projektion der zweiten Spleißschutzhalter in der Faserrichtung in die obige Querschnittsebene, also eine Ebene normal zur Faserrichtung, so zeigt die Projektion bevorzugt jeweils eine Innenseite von mindestens einem der zweiten Wandabschnitte und eine Oberseite mindestens eines der ersten Wandabschnitte. Diese Elemente machen vorzugsweise einen zweiten Spleißschutzhalter aus. Mit Oberseite ist hierbei diejenige Seite des jeweiligen ersten Wandabschnittes gemeint, welche in Richtung der positiven vertikalen Richtung weist. Es sei angemerkt, dass damit keine Aussage über das Vorhandensein oder Nichtvorhandensein einer Mehrzahl zweiter Wandabschnitte in Faserrichtung getroffen ist, denn in der Projektion in Faserrichtung erscheinen mehrere, in Faserrichtung hintereinander angeordnete zweite Wandabschnitte, vorzugsweise kongruent.

Bei einer bevorzugten Ausführungsform der Ablageeinrichtung schließen an jeweils einen der zweiten Spleißschutzhalter genau zwei der ersten Spleißschutzhalter an. Es sind grundsätzlich jedoch auch andere Verhältnisse der ersten zu den zweiten Spleißschutzhaltern denkbar; bspw. könnten an jeden zweiten Spleißschutzhalter auch nur ein erster Spleißschutzhalter oder drei erste Spleißschutzhalter oder mehr anschließen. Bevorzugt ist jedoch ein Verhältnis von 1:2. Auf diese Weise ist die Ablageeinrichtung besonders gut und platzökonomisch an ein Breitenverhältnis der Querschnitte der ersten und zweiten Spleißschutzhalter angepasst.

Hierbei weisen die ersten Spleißschutzhalter zu dem zweiten Spleißschutzhalter eine jeweilige Öffnung auf. Die ersten Spleißschutzhalter sind also, bezogen auf einen Querschnitt normal zur Faserrichtung, nicht rundum geschlossen, sondern zum jeweiligen zweiten Spleißschutzhalter hin geöffnet. Gleichzeitig handelt es sich um eine Öffnung des zweiten Spleißschutzhalters; die ersten Spleißschutzhalter sind damit mit dem zweiten Spleißschutzhalter über diese Öffnungen verbunden. Zusätzlich weist der zweite Spleißschutzhalter an einer den ersten Spleißschutzhaltern abgewandten Seite, also in negativer vertikaler Richtung, eine weitere Öffnung auf. Bei bestimmungsgemäßer Anwendung der Ablageeinrichtung öffnet letztere Öffnung den zweiten Spleißschutzhalter zum Ablegen von Spleißschutzvorrichtungen.

Die Öffnungen sind hierbei so dimensioniert, dass eine Spleißschutzvorrichtung durch sie durchgeführt werden kann, und zwar sowohl eine erste Spleißschutzvorrichtung für die Ablage im ersten Spleißschutzhalter als auch eine zweite Spleißschutzvorrichtung für eine Ablage im zweiten Spleißschutzhalter. Letztlich ermöglichen diese Öffnungen eine Verwendung, bei welcher eine Spleißschutzvorrichtung von außerhalb der Ablageeinrichtung kommend besonders einfach senkrecht zur Faserrichtung in den zweiten Spleißschutzhalter abgelegt oder durch diesen hindurchgeführt und in einen der ersten Spleißschutzhalter abgelegt werden kann. Gemäß einer bevorzugten Ausführungsform sind die zweiten Wandabschnitte bezogen auf ihre vertikale Ausdehnung dünnwandig gestaltet. Ihre Materialstärke, also die betragsmäßig kleinste Abmessung der Wandabschnitte, ist im Verhältnis zur vertikalen Ausdehnung vorzugsweise mindestens 1,5-, 1,75- oder 2,0-mal und höchstens 7,5-, 6,0-, 5,0, 4,0- oder 3,5-mal geringer. Bevorzugt sind auch die ersten Wandabschnitte dünnwandig ausgeführt; sie weisen dann eine horizontale Ausdehnung auf, welche im Verhältnis zur vertikalen Ausdehnung mindestens 2,0-, 2,5- oder 3,0-mal und höchstens 7,5-, 6,0-, 5,0- oder 4,5-mal geringer ist. Hierbei müssen sich jedoch nicht alle ersten Wandabschnitte gleich weit in vertikaler Richtung ausdehnen. Bevorzugt ist sogar, dass sich diejenigen ersten Wandabschnitte, an die zweite Wandabschnitte anschließen, in vertikaler Richtung weiter ausdehnen als diejenigen, an die kein zweiter Wandabschnitt anschließt. Diese Dünnwandigkeit ermöglicht den Wandabschnitten eine ausgeprägte Flexibilität.

Bevorzugt sind die zweiten Wandabschnitte in Faserrichtung relativ zur den ersten Wandabschnitten kürzer. Besonders bevorzugt sind die zweiten Wandabschnitte mindestens 3-, 6- oder 8-mal und höchstens 40-, 30-, 20- oder 15-mal kürzer als die Ausdehnung der ersten Wandabschnitte in Faserrichtung. Hierbei müssen sich jedoch nicht alle zweiten Wandabschnitte gleich lang in Faserrichtung erstrecken. Wenn es innerhalb desselben zweiten Spleißschutzhalters zweite Wandabschnitte gibt, die länger sind als andere, lässt sich bspw. eine Anzahlasymmetrie der beidseitig angeordneten zweiten Wandabschnitte ausgleichen.

Bevorzugt sind die ersten Spleißschutzhalter für die Ablage von Crimpspleißschutzvorrichtungen ausgelegt und die zweiten Spleißschutzhalter für die Ablage von Schrumpfspleißschutzvorrichtungen. Diese sind an sich bekannt und werden durch verschiedene Verfahren um eine verspleißte Verbindungsstelle zweier LWL-Kabel angebracht, wie eingangs erwähnt. Beide Varianten sind gängig, sie weisen jedoch ein unterschiedliches Ausbreitungsgebiet auf: Während in Deutschland vorwiegend Crimpspleißschutzvorrichtungen eingesetzt werden, werden außerhalb Deutschlands in Europa und auch weltweit vorwiegend Schrumpfspleißschutzvorrichtungen eingesetzt. Durch die Kombination beider Varianten in einer Ablageeinrichtung entfallen etwaige Umbaumaßnahmen. Dies wirkt sich nicht nur auf eine schlankere Logistik aus, sondern kann auch eine Zeitersparnis sowie eine Abfallreduktion bewirken. Bei der Verwendung kann also in einen der ersten Spleißschutzhalter eine Crimpspleißschutzvorrichtung und in einen der zweiten Spleißschutzhalter eine Schrumpfspleißschutzvorrichtung abgelegt werden.

Besonders bevorzugt sind die ersten Spleißschutzhalter dabei für Spleißschutzvorrichtungen ausgelegt, welche Querschnittsabmessungen mit einer Breite, im abgelegten Zustand also einer horizontalen Ausdehnung, zwischen 1,05 mm und 1,40 mm und einer Höhe, im abgelegten Zustand also einer vertikalen Ausdehnung, von 3,0 mm bis 3,4 mm aufweisen.

Weiterhin bevorzugt sind zweite Spleißschutzhalter, die für die Aufnahme von Spleißschutzvorrichtungen ausgelegt sind, welche einen Querschnittsdurchmesser von mindestens 1,0 mm, 1,5 mm oder 2,0 mm mit möglichen Obergrenzen bei 5,0 mm, 4,0 mm oder 3,0 mm aufweisen. Bei nicht kreisförmigen Querschnitten von Spleißvorrichtungen beziehen sich diese Angaben auf den gemittelten Durchmesser. Bei einem elliptischen Querschnitt z. B. ergäbe sich dieser aus dem Mittelwert der kürzesten und der längsten Hauptachse, bei einem ovalen entsprechend gemittelt aus dem kürzesten und dem längsten Durchmesser.

Bei einer bevorzugten Ausführungsform entspricht die vertikale Abmessung der Innenseite erster Wandabschnitte der vertikalen Abmessung des Querschnittes einer Spleißschutzvorrichtung. "Entspricht" meint hier, dass insbesondere die Innenseiten derjenigen ersten Wandabschnitte, an welche zweite Wandabschnitte anschließen, eine vertikale Abmessung aufweisen, welche mindestens 80 %, 82 % oder sogar 84 % der vertikalen Abmessung des Querschnittes der Spleißschutzvorrichtung beträgt. Wird also eine Spleißschutzvorrichtung in einen der ersten Spleißschutzhalter abgelegt, so steht deren Oberseite, also ihre in die positive vertikale Richtung weisende Außenfläche, um höchstens 20 %, 18 % oder sogar nur 16 % ihrer vertikalen Ausdehnung gegenüber der Verbindungsstelle zwischen erstem Wandabschnitt und daran anschließendem zweiten Wandabschnitt in vertikaler Richtung über. Hierdurch wird erreicht, dass selbst bei einer in einen der ersten Spleißschutzhalter abgelegten Spleißschutzvorrichtung im daran angrenzenden zweiten Spleißschutzhalter gleichzeitig eine Spleißschutzvorrichtung abgelegt werden kann. Generell führt diese Dimensionierung dazu, dass alle Spleißschutzhalter der Ablageeinrichtung gleichzeitig mit Spleißschutzvorrichtungen belegt sein können.

Bei einer bevorzugten Ausführungsform weist eine Schrumpfspleißschutzvorrichtung, die in einen zweiten Spleißschutzhalter abgelegt ist, in einer Projektion in Faserrichtung an drei Kontaktstellen Kontakt zum zweiten Spleißschutzhalter auf. Kontakt besteht hierbei zu zwei der zweiten Wandabschnitte und einem der ersten Wandabschnitte. Da ein zweiter Spleißschutzhalter in Faserrichtung eine Mehrzahl an zweiten Wandabschnitten hintereinander aufweisen kann, hat eine abgelegte Schrumpfspleißschutzvorrichtung bei dreidimensionaler Betrachtung insgesamt an mehr als drei Kontaktstellen Kontakt zum zweiten Spleißschutzhalter. Die besagten drei Kontaktstellen beziehen sich also auf eine zweidimensionale Betrachtung. Wird also eine Schrumpfspleißschutzvorrichtung in einen zweiten Spleißschutzhalter abgelegt, so tritt dieser in Kontakt zu denjenigen zweiten Wandabschnitten, die, bezogen auf die horizontale Richtung, beidseitig der abgelegten Schrumpfspleißschutzvorrichtung angeordnet sind und Teil jenes Spleißschutzhalters sind, in den die Schrumpfspleißschutzvorrichtung abgelegt wird. Zudem tritt die Schrumpfspleißschutzvorrichtung in Kontakt zu demjenigen ersten Wandabschnitt, welcher, bezogen auf die horizontale Richtung, zwischen den besagten zweiten Wandabschnitten angeordnet ist.

In bevorzugter Weise wird bei einer Projektion der Mantelfläche der Schrumpfspleißschutzvorrichtung in Faserrichtung die Projektionslinie durch die drei oben angesprochenen Kontaktstellen in drei Segmente unterteilt, wobei die Bogenlänge der Segmente jeweils zwischen 26 % und 50 %, vorzugsweise zwischen 28 % und 40 % des Schrumpfspleißschutzvorrichtungsumfangs beträgt. Wird also eine Schrumpfspleißschutzvorrichtung in einen zweiten Spleißschutzhalter abgelegt, sodass er in Kontakt mit den zugehörigen zweiten Wandabschnitten und dem bzgl. der horizontalen Richtung dazwischenliegenden ersten Wandabschnitt tritt, so teilen diese die Projektionslinie der Mantelfläche in drei Segmente. Dies ist insofern vorteilhaft, als dass ein zweiter Spleißschutzhalter eine darin abgelegte Schrumpfspleißschutzvorrichtung "allseitig" umfasst, deren runder Querschnitt also "von drei Seiten" eingefasst ist. Hierdurch kann eine besonders sichere Fixierung der Schrumpfspleißschutzvorrichtung in der Ablageeinrichtung bei gleichzeitiger Vermeidung einer geometrischen Überdefinition ermöglicht werden.

In bevorzugter Ausgestaltung sind alle Spleißschutzhalter der Ablageeinrichtung dafür ausgelegt, Spleißschutzvorrichtungen aufnehmen zu können, die länger sind als eine Gesamtlänge der Ablageeinrichtung in Faserrichtung. Es ist damit möglich, Spleißschutzvorrichtungen abzulegen, wobei sie zumindest einseitig, vorzugsweise auch beidseitig aus der Ablageeinrichtung in Faserrichtung über die Außengrenzen der Ablageeinrichtung hinaus überstehen können. In bevorzugter Weise gibt es für die Ablage einer Spleißschutzvorrichtung also auch keine festgelegte alleinige Position in Faserrichtung. Sie kann stattdessen in Faserrichtung asymmetrisch abgelegt werden (ihr Mittelpunkt in Faserrichtung muss also nicht mit dem Mittelpunkt der Ablageeinrichtung in Faserrichtung übereinstimmen). In besonders bevorzugter Weise ist die Ablageeinrichtung auch dafür ausgelegt, dass sich zumindest eines der Enden einer Spleißschutzvorrichtung in Faserrichtung innerhalb eines Spleißschutzhalters befindet. Folglich könnte eine abgelegte Spleißschutzvorrichtung also auch kürzer als der Spleißschutzhalter sein. Dies ermöglicht eine besonders ausgeprägte Flexibilität hinsichtlich unterschiedlicher Spleißschutzvorrichtungslängen.

In einer bevorzugten Ausführungsform besteht die Ablageeinrichtung aus einem elastischen Material. Bevorzugt ist ferner ein Kunststoffteil, besonders bevorzugt Kunststoffspritzgussteil. Die Elastizität stellt sicher, dass die Spleißschutzvorrichtungen einerseits nicht durch die Wandabschnitte beschädigt werden und andererseits sicher in der Ablageeinrichtung fixiert sind. Auf diese Weise kann bspw. mithilfe der zweiten Wandabschnitte eines zweiten Spleißschutzhalters eine dort abgelegte zweite Spleißschutzvorrichtung formschlüssig und besonders sicher fixiert werden. Außerdem ermöglicht die Ausführung als Kunststoffspritzgussteil, die Ablageeinrichtung schnell, kostengünstig und in großer Zahl produzieren zu können.

Bei einer bevorzugten Gestalt der Ablageeinrichtung sind die Spleißschutzhalter in horizontaler Richtung identisch repetitiv angeordnet. Die Ablageeinrichtung könnte also anstatt nur einer einzigen Einheit aus einem zweiten Spleißschutzhalter und einer Mehrzahl daran anschließender erster Spleißschutzhalter eine Mehrzahl solcher Einheiten aufweisen, wobei sich diese Mehrzahl an Einheiten bevorzugt in horizontaler Richtung erstreckt. Folglich weist die Ablageeinrichtung in diesem Fall sowohl eine Reihe identisch repetitiver erster Spleißschutzhalter als auch eine Reihe in horizontaler Richtung identisch repetitiver zweiter Spleißschutzhalter auf. Dies ist besonders vorteilhaft, da sich somit die Ablageeinrichtung besonders einfach skalieren und sich bspw. an verschiedene Spleißkassettengrößen anpassen lässt. Obwohl die Repetition entlang der horizontalen Richtung bevorzugt ist, sind grundsätzlich auch andere Anordnungen denkbar. Die Spleißschutzhalter könnten bspw. auch entlang einer gekrümmten Linie oder schräg zur horizontalen Richtung identisch repetitiv angeordnet sein.

Bei einer bevorzugten Ausführungsform der Ablageeinrichtung weist diese eine Vorrichtung zur Befestigung der Ablageeinrichtung in einer übergeordnete Lichtleiterfasermanagementvorrichtung, wie bspw. einer Spleißkassette oder einem separaten Gehäuse, auf. Bevorzugt weist diese Vorrichtung eine kreisförmige Durchgangsöffnung in vertikaler Richtung zur Aufnahme eines komplementären Steckelements der übergeordneten Vorrichtung auf. Dadurch kann die Innenfläche der Durchgangsöffnung eine Kontaktfläche zu dem Steckelement der übergeordneten Vorrichtung darstellen, die eine sichere Fixierung ermöglicht, ohne dass zusätzlich bspw. eine Schraube oder Rastelemente erforderlich sind. So kann die Ablageeinrichtung leicht und schnell in die übergeordnete Vorrichtung sowohl eingesetzt als auch wieder entnommen werden, bspw. im Falle eines Defekts oder einer Beschädigung der Ablageeinrichtung.

Die vorliegende Erfindung bezieht sich bevorzugt auch auf eine Lichtleiterfasermanagementvorrichtung, womit eine übergeordnete Vorrichtung gemeint ist, welche sowohl eine Ablageeinrichtung (wie oben beschrieben) als auch eine Kabelüberlängenablage aufweist. Bevorzugt handelt es sich bei der Lichtleiterfasermanagementvorrichtung um eine sogenannte Spleißkassette. Spleißkassetten sind solche Lichtleiterfasermanagementvorrichtung, die bevorzugt drehbar als Teil eines Spleißmoduls gelagert sind. Bevorzugt befinden sich in einem solchen Spleißmodul eine Mehrzahl identischer Spleißkassetten. Durch die Drehbarkeit sind Arbeiten an den Lichtleiterfasern besonders einfach durchzuführen, indem nicht benötigte Spleißkassetten bspw. nach oben oder zur Seite gedreht werden können und dadurch Zugang zu der bestimmten Spleißkassette gewährt wird, an welcher aktuell Arbeiten durchzuführen sind.

Es könnte sich bei der Lichtleiterfasermanagementvorrichtung jedoch auch um eine separate, verschließbare Box handeln, also ein Gehäuse mit einem Deckel, Seitenwänden und einer Grundplatte, auf welcher eine Kabelüberlängenablage und eine Ablageeinrichtung angebracht sind.

Kabelüberlängen von Lichtleiterfasern treten als Reserven für spätere Änderungen und/oder zur Vermeidung einer unnötigen Zahl von Spleißstellen regelmäßig auf, insbesondere auch in Verbindung mit Spleißstellenablagen. Überlängen in diesem Sinn können in Kabelüberlängenablagen aufgewickelt sein.

Vorzugsweise ist eine Ablageeinrichtung, welche Teil einer solchen Lichtleiterfasermanagementvorrichtung ist, einstückig mit der Kabelüberlängenablage gestaltet, besonders bevorzugt monolithisch einstückig. Monolithisch bedeutet hier, dass sich innerhalb des Materials keine Materialgrenzen befinden. Hierdurch kann die gesamte Lichtleiterfasermanagementvorrichtung inklusive der Ablageeinrichtung und der Kabelüberlängenablage sowohl aus demselben Material bestehen, als auch durch einen einzigen Fertigungsschritt hergestellt werden. Die Produktion einer solchen Lichtleiterfasermanagementvorrichtung kann dadurch kostengünstiger und schneller erfolgen, zudem ist die Zahl an Einzelteilen reduziert. Nicht zuletzt ergibt sich durch diese Einstückigkeit in Kombination mit der Eignung der Ablageeinrichtung für zwei, insbesondere beide gängigen Spleißschutzvorrichtungstypen eine Vollständigkeit und Einsatzbereitschaft der Ablageeinrichtung unabhängig vom späteren Einsatzort. Dadurch entfällt, eine Ablageeinrichtung passend zu den abzulegenden Spleißschutzvorrichtungen auszuwählen und in die Lichtleiterfasermanagementvorrichtung einzusetzen.

Die vorliegende Erfindung bezieht sich auch auf ein Spleißmodul mit einer Mehrzahl gleichartiger Lichtleiterfasermanagementvorrichtungen, insbesondere Spleißkassetten. Besonders bevorzugt sind hierbei die Spleißkassetten drehbar gelagert mit dem Spleißmodul verbunden.

Die vorliegende Erfindung bezieht sich auch auf die Verwendung einer Ablageeinrichtung, einer Lichtleiterfasermanagementvorrichtung oder eines Spleißmoduls zur Ablage von Spleißschutzvorrichtungen, bei welcher Verwendung eine Schrumpfspleißschutzvorrichtung in einen der ersten Spleißschutzhalter oder eine Crimpspleißschutzvorrichtung in einen der zweiten Spleißschutzhalter abgelegt wird. Besonders bevorzugt erfolgt bei dieser Verwendung die Ablage von sowohl einer Schrumpfspleißschutzvorrichtung als auch einer Crimpspleißschutzvorrichtung in dieselbe Ablageeinrichtung, Lichtleiterfasermanagementvorrichtung oder Spleißmodul. Doch auch bei einer Ablage von Spleißschutzvorrichtungen nur eines Typs ist die Ablageeinrichtung bzw. die damit ausgerüstete Lichtleiterfasermanagementvorrichtung vorteilhaft, da sie zur Ablage der gängigsten Spleißschutzvorrichtungstypen ohne Anpassung und Umbaumaßnahmen verwendet werden kann.

Im Folgenden wird die Erfindung anhand von Ausführungsbeispielen näher erläutert, wobei die einzelnen Merkmale auch in anderen Kombinationen erfindungswesentlich sein können und sich implizit auf alle Kategorien der Erfindung beziehen.

Im Einzelnen zeigt:
- Figur 1: eine perspektivische Ansicht von 1a) einer erfindungsgemäßen Ablageeinrichtung mit abgelegten Schrumpf- und Crimpspleißschutzvorrichtungen, 1b) die Ablageeinrichtung nur mit Crimpspleißschutzvorrichtungen und 1c) die Ablageeinrichtung nur mit Schrumpfspleißschutzvorrichtungen,
- Figur 2: einen Ausschnitt aus einem Querschnitt der Ablageeinrichtung normal zu einer Faserrichtung,
- Figur 3: eine Draufsicht 3a) auf die Ablageeinrichtung mit zwei Schnitten 3b), 3c) an zwei Positionen A-A, B-B,
- Figur 4: in 4a) eine Projektion der Ablageeinrichtung in Faserrichtung mit abgelegten Schrumpf- und Crimpspleißschutzvorrichtungen gemäß Fig. 1a) sowie in 4b) eine Detailansicht davon,
- Figur 5: in 5a) eine perspektivische Ansicht einer erfindungsgemäßen Lichtleiterfasermanagementvorrichtung mit abgelegten Crimpspleißschutzvorrichtungen sowie in 5b) eine geschnittene Darstellung eines Ausschnitts der Lichtleiterfasermanagementvorrichtung als zweites Ausführungsbeispiel.

### Bevorzugte Ausführung der Erfindung

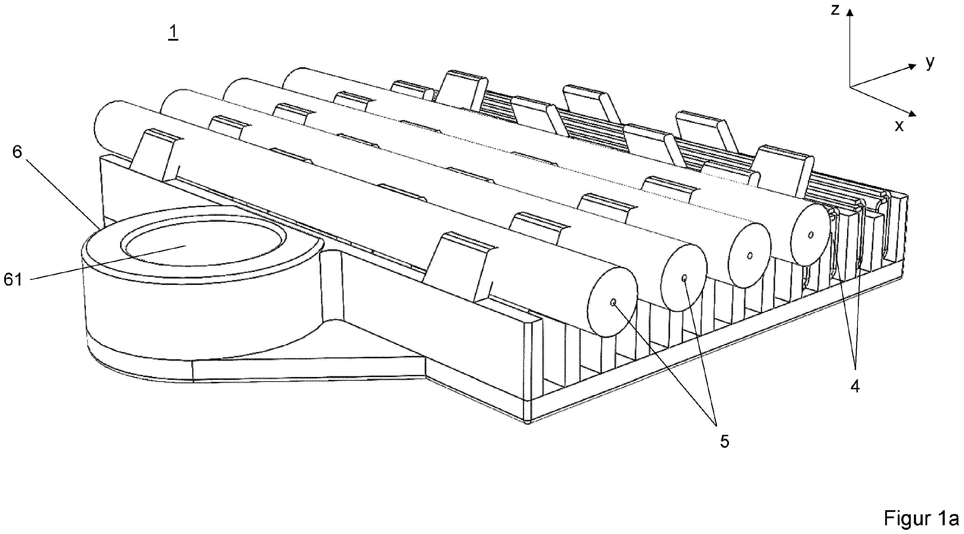

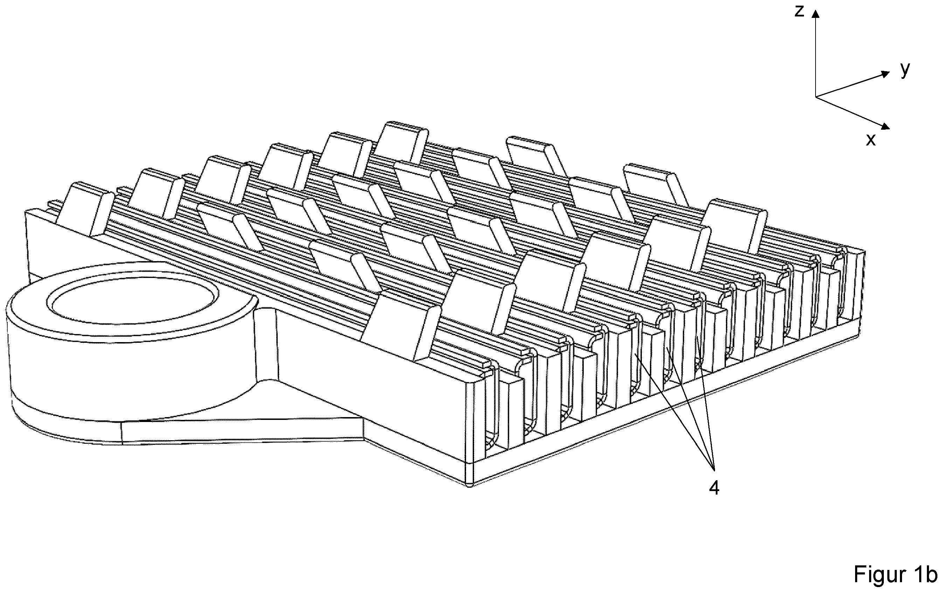

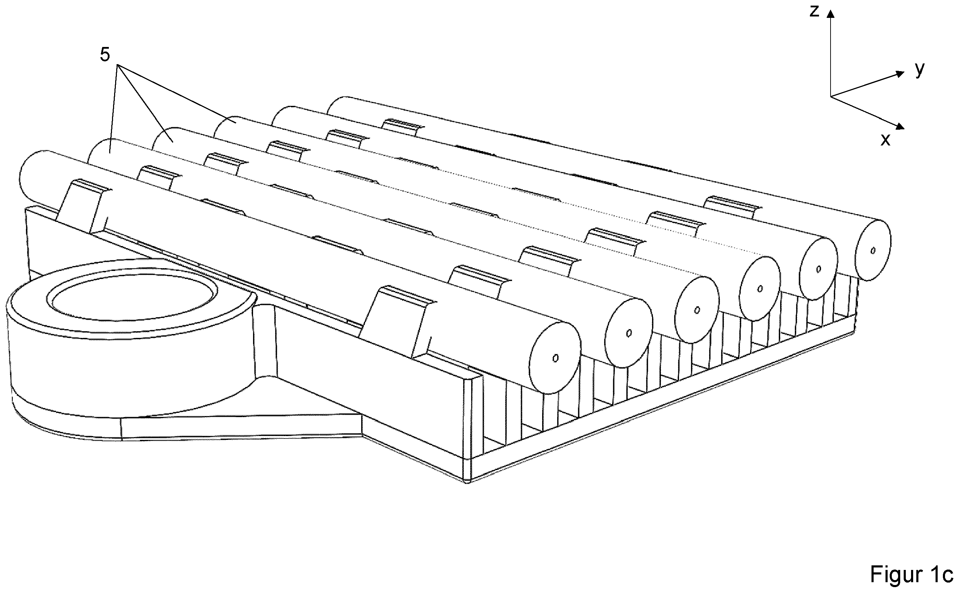

**Figur 1** zeigt eine erfindungsgemäße Ablageeinrichtung 1 als Kunststoffspritzgussteil in drei Schrägansichten mit jeweils unterschiedlicher Belegungssituation mit Spleißschutzvorrichtungen 4, 5. Hierbei verdeutlicht insbesondere die Figur 1a die Möglichkeit, sowohl Schrumpfspleißschutzvorrichtungen 5, als auch Crimpspleißschutzvorrichtungen 4 in dieselbe Ablageeinrichtung 1 ablegen zu können. Die Figuren 1b und 1c zeigen dagegen typenreine Ablagesituationen mit nur Crimpspleißschutzvorrichtungen 4 bzw. nur Schrumpfspleißschutzvorrichtungen 5. Dies verdeutlicht die flexible Ablagemöglichkeit verschiedener Spleißschutztypen.

Die Figuren 1a und 1c zeigen weiterhin, wie die Schrumpfspleißschutzvorrichtungen 5 beidseitig über die Außengrenzen der Ablageeinrichtung 1 in Faserrichtung x hinausstehen. Insbesondere die Figur 1b zeigt die in horizontaler Richtung y repetitive Anordnung der Spleißschutzhalter.

In den Figuren 1a bis 1c ist auch die Vorrichtung 6 zur Befestigung der Ablageeinrichtung 1 dargestellt, welche eine kreisförmige Durchgangsöffnung 61 in vertikaler Richtung z aufweist. Über diese Vorrichtung 6 könnte die Ablageeinrichtung 1 beispielsweise in einer Lichtleiterfasermanagementvorrichtung 7 (in Figur 1 nicht dargestellt) fixiert werden.

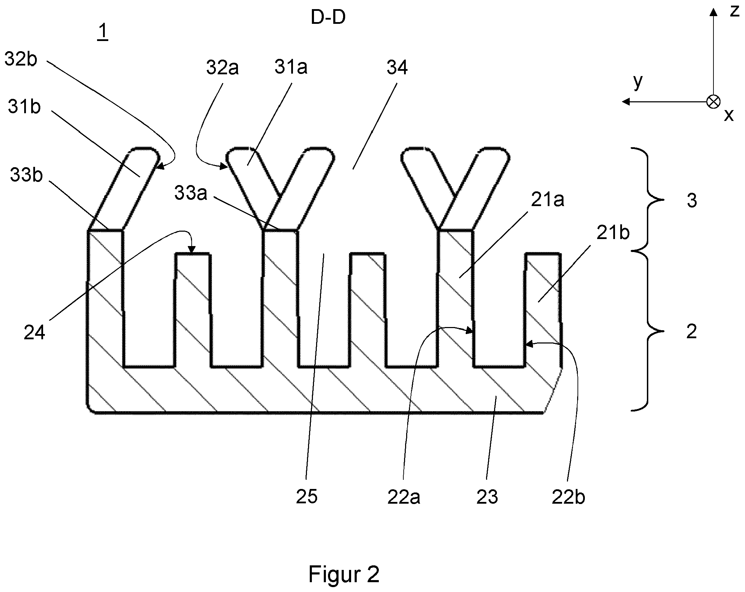

**Figur 2** zeigt die Ablageeinrichtung 1 durch eine normal zur Faserrichtung x teilgeschnittene Detailansicht. Dargestellt sind erste Spleißschutzhalter 2, welche zwei erste Wandabschnitte 21a, 21b mit planen, zueinander parallel stehenden Innenseiten 22a, 22b sowie senkrecht dazu einen Bodenabschnitt 23 aufweisen. Weiterhin zu sehen sind zweite Spleißschutzhalter 3, jeweils bestehend aus Mitgliedern einer ersten Gruppe zweiter Wandabschnitte 31a sowie einer zweiten Gruppe zweiter Wandabschnitte 31b, welche wiederum relativ zueinander unter einem Winkel von 55° geneigte Innenseiten 32a, 32b aufweisen (eine Parallelität würde 0° entsprechen).

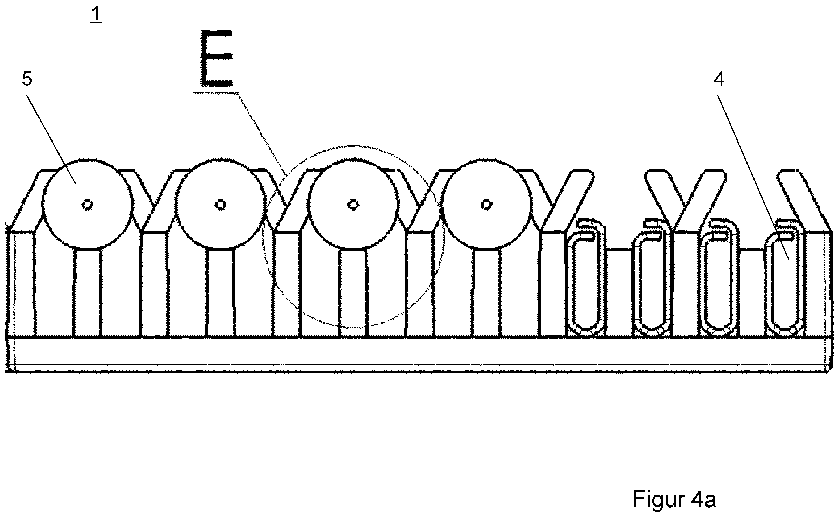

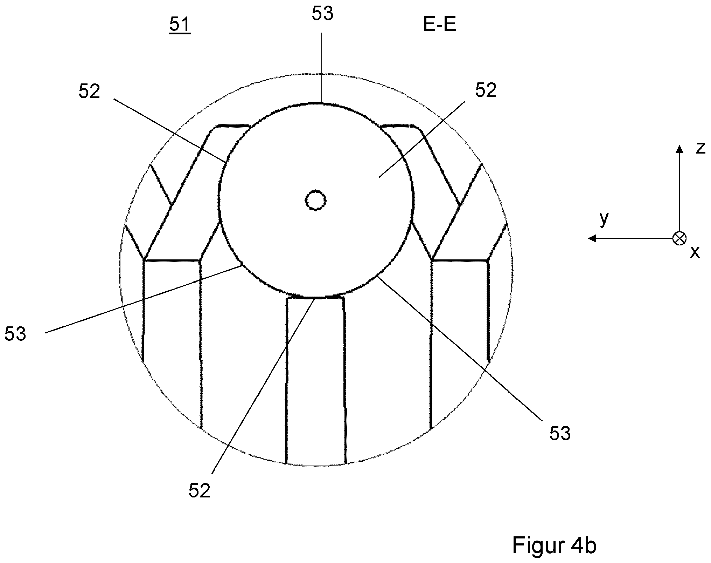

Die Mitglieder 31a der ersten Gruppe befinden sich an einer horizontalen Seite (-y-Richtung) eines Aufnahmevolumens eines der zweiten Spleißschutzhalter 3 und die Mitglieder 31b der zweiten Gruppe an der horizontal gegenüberliegenden Seite (+y-Richtung) des Aufnahmevolumens und der ersten Gruppe gegenüber. Der Relativwinkel ihrer jeweiligen Innenseiten sorgt damit für eine Umschließung, an den das Aufnahmevolumen des jeweiligen zweiten Spleißschutzhalters 3 grenzt. Somit weist jeder zweite Spleißschutzhalter 3 zwei Mitglieder beider Gruppen 31a, 31b auf, die für einen Formschluss um eine abgelegte Spleißschutzvorrichtung sorgen, vgl. Fig. 4.

Das Aufnahmevolumen grenzt zudem an eine Oberseite 24 eines der ersten Wandabschnittes 21b. Die zweiten Wandabschnitte 31a, 31b sind mit einem unteren Ende 33a, 33b, welches also in die negative vertikale Richtung -z weist, an ersten Wandabschnitten 21a angeschlossen. Die zweiten Spleißschutzhalter 3 liegen also vertikal über den ersten Spleißschutzhaltern 2. Alternativ dazu ist jedoch auch eine Anordnung denkbar, bei der jeweils einer der zweiten Spleißschutzhalter 3 zwischen je zwei der ersten Spleißschutzhalter 2 angeordnet ist, oder bei der sich die ersten Spleißschutzhalter 2 vertikal über den zweiten Spleißschutzhaltern 3 befinden.

Die Spezialisierung der Ablageeinrichtung 1 auf die erste 4 und die zweite Spleißschutzvorrichtung 5 ermöglicht es, die Spleißschutzhalter 2, 3 jeweils präzise an die entsprechenden Geometrien der Spleißschutzvorrichtungen 4, 5 anzupassen. Im Gegensatz zu denkbaren Lösungen, bei denen verschiedene Spleißschutzvorrichtungstypen in einem gemeinsamen Spleißschutzhalter abgelegt werden und dieser deshalb stets an die Geometrie des größten Querschnittes angepasst sein muss, kann so eine platzökonomischer gestaltete Ablageeinrichtung 1 realisiert werden.

Die ersten Spleißschutzhalter 2 weisen eine jeweilige Öffnung 25 auf, mit denen die ersten Spleißschutzhalter 2 zu den zweiten Spleißschutzhaltern 3 hin geöffnet sind. Die zweiten Spleißschutzhalter 3 weisen an der den ersten Spleißschutzhaltern 2 abgewandten Seite eine weitere Öffnung 34 auf, welche nach der Darstellung in Figur 2 die zweiten Spleißschutzhalter 3 nach oben hin (positive z-Richtung) öffnet. Durch die Öffnung 34 kann eine Schrumpfspleißschutzvorrichtung in einen zweiten Spleißschutzhalter 3 abgelegt werden. Durch beide Öffnungen 34, 25 können Crimpspleißschutzvorrichtungen 4 durch die zweiten Spleißschutzhalter 3 hindurch in die ersten Spleißschutzhalter 2 abgelegt werden.

Figur 2 illustriert zudem die Dünnwandigkeit der ersten Wandabschnitte 21a, 21b von etwa 0,8 mm, welche damit bezogen auf ihre vertikale Ausdehnung 3,2-mal bzw. 3,9-mal dünner gestaltet sind, sowie der zweiten Wandabschnitte 31a, 31b, welche ebenfalls etwa 0,8 mm dünn und damit bezogen auf ihre vertikale Ausdehnung 3-mal dünner gestaltet sind. Figur 2 illustriert auch, wie die ersten Spleißschutzhalter 2 aufgrund der planen und zueinander parallelen Innenseiten 22a, 22b (mit einer Winkelabweichung von etwa 2°) der ersten Wandabschnitte 21a, 21b für Spleißschutzvorrichtungen ausgelegt sind, welche ebenfalls einen Querschnitt mit parallelen Außenseiten aufweisen (mit einer Winkelabweichung von etwa 2°). Diese Geometrie in Kombination mit dem verwendeten elastischen Material ermöglicht eine kraftschlüssige Fixierung der Crimpspleißschutzvorrichtungen 4 innerhalb der ersten Spleißschutzhalter 2 zusätzlich zu einem Formschluss durch die geneigten Innenseiten 32a, 32b der zweiten Wandabschnitte 31a, 31b.

Im Gegensatz dazu sind die zweiten Spleißschutzhalter 3 aufgrund der zueinander geneigten Innenseiten 32a, 32b der zweiten Wandabschnitte 31a, 31b für Spleißschutzvorrichtungen ausgelegt, welche einen runden, bevorzugt einen kreisförmigen Querschnitt aufweisen und damit auf der Oberseite 24 erster Wandabschnitte 21b aufliegen und von oben formschlüssig gehalten werden können.

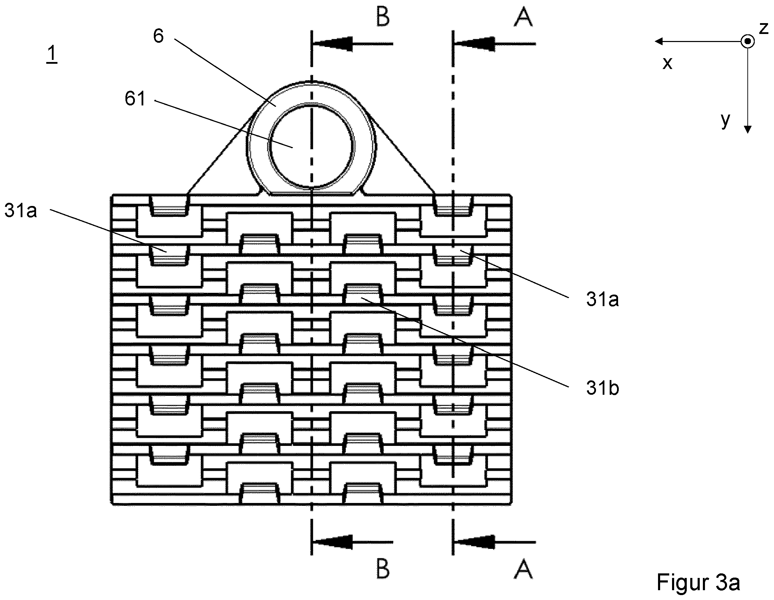

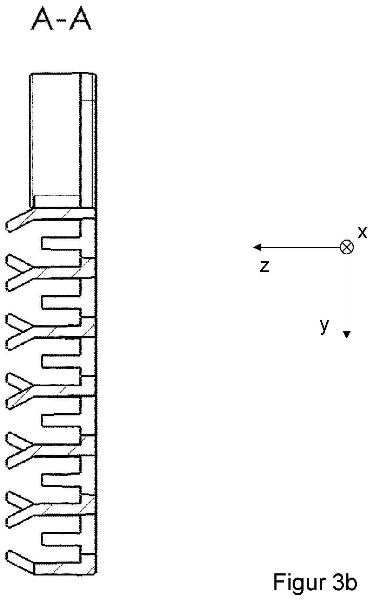

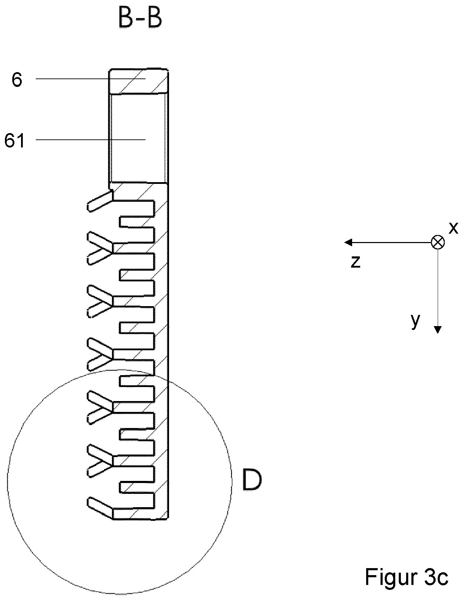

**Figur 3** zeigt in Teilfigur 3a eine Draufsicht der Ablageeinrichtung 1. Dargestellt ist die Anordnung von je zwei Mitgliedern 31a einer ersten Gruppe zweiter Wandabschnitte und einer zweiten Gruppe zweiter Wandabschnitte pro zweitem Spleißschutzhalter 3. Weiterhin ist zu sehen, dass die zweiten Wandabschnitte 31a, 31b in Faserrichtung x kürzer als die Gesamtabmessung der Ablageeinrichtung 1 von 31 mm gestaltet sind, wobei die zweiten Wandabschnitte 3 mm Länge aufweisen. Damit sind die zweiten Wandabschnitte 31a 10-mal kürzer als die Ausdehnung der ersten Wandabschnitte 21a, 21b in Faserrichtung x. Die beiden Schnittansichten 3b, 3c zeigen sowohl die relative Neigung der zweiten Wandabschnitte 31a, 31b mit einem Winkel von 55° zueinander als auch die relativen Abmessungen der vertikalen Durchgangsöffnung 61 der Befestigungsvorrichtung 6, mit einem Innendurchmesser, der dem etwa 5,5-fachen des Abstandes der Innenseiten 22a, 22b der ersten Wandabschnitte 21a, 21b eines der ersten Spleißschutzhalter 2 entspricht und einer vertikalen Ausdehnung, die dem etwa 0,6-fachen ihres Durchmessers entspricht.

**Figur 4** zeigt in Teilfigur 4a eine Projektion der Ablageeinrichtung 1 in Faserrichtung x mit abgelegten Schrumpfspleißschutzvorrichtungen 5 und Crimpspleißschutzvorrichtungen 4. Es ist zu sehen, dass die Oberseite der Crimpspleißschutzvorrichtung 4 vertikal um etwa 15% ihrer vertikalen Ausdehnung gegenüber einer Verbindungsstelle 33a, 33b zwischen einem der ersten Wandabschnitt 21a und einem daran anschließenden der zweiten Wandabschnitte 31a, 31b in vertikaler Richtung übersteht. Die Oberseite befindet sich also oberhalb einer der Verbindungsstellen 33a, 33b.

Häufig werden in der Ablageeinrichtung 1 entweder Crimp- 4 oder Schrumpfspleißschutzvorrichtungen 5 abgelegt werden, sodass die Ablagemöglichkeit mehrerer Spleißschutzvorrichtungen direkt übereinander in der Praxis wohl selten genutzt wird. Allenfalls werden beide Typen horizontal nebeneinander abgelegt (vgl. Fig. 4). Nichtsdestotrotz ermöglichen es die vertikale Dimensionierung der ersten Wandabschnitte 21a, 21b im Verhältnis zur vertikalen Ausdehnung einer Crimpspleißschutzvorrichtung 4 und das flexible Material der Ablageeinrichtung 1, bei Bedarf eine Schrumpfspleißschutzvorrichtung auch über einer Crimpspleißschutzvorrichtung abzulegen. In diesem Fall werden die zweiten Wandabschnitte 31a, 31b entsprechend weiter nach oben gebogen, als es ohne eine darunterliegende Crimpspleißschutzvorrichtung der Fall wäre und es in Fig. 4 dargestellt ist.

Die Teilansicht 4b ist eine Detailansicht der Figur 4a. Zu sehen ist die Projektion der zweiten Wandabschnitte 31a, 31b in die Querschnittsebene. In dieser Detailansicht sind die drei Kontaktstellen 52, mit denen die Schrumpfspleißschutzvorrichtung in Kontakt mit dem zweiten Spleißschutzhalter 3 tritt, gut zu erkennen. Diese drei Kontaktstellen 52 teilen die Projektion der Mantelfläche der Schrumpfspleißschutzvorrichtung 5 in drei Segmente 53. Durch die drei Kontaktstellen 52 wird die abgelegte Schrumpfspleißschutzvorrichtung 5 "von drei Seiten" fixiert.

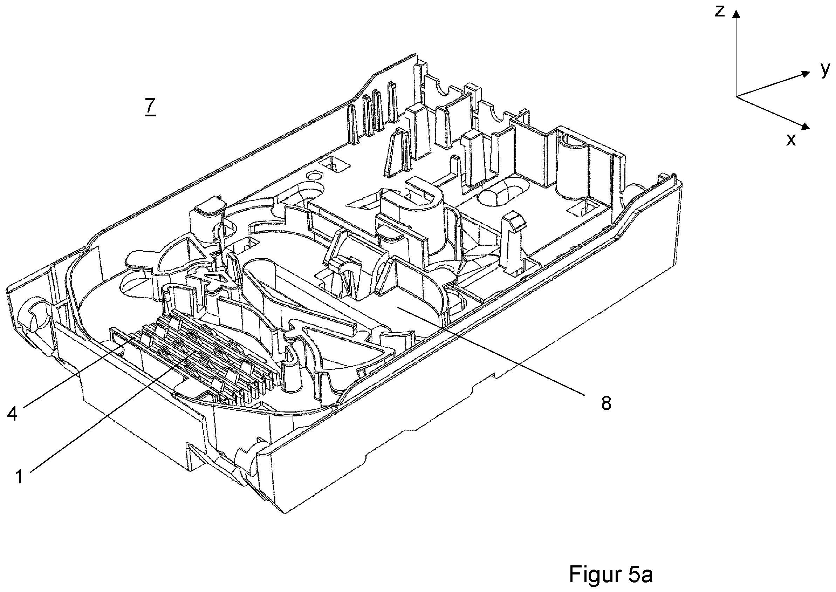

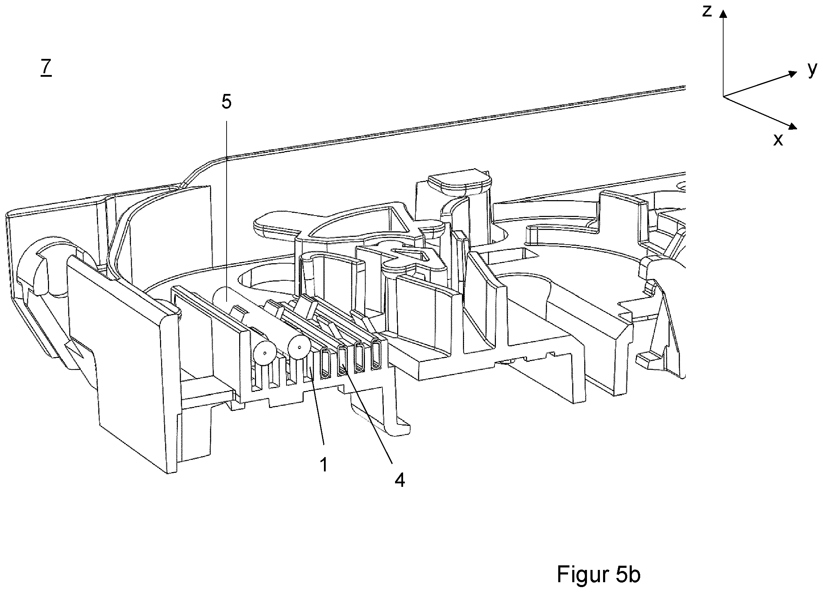

**Figur 5** zeigt in 5a eine perspektivische Ansicht einer erfindungsgemäßen Lichtleiterfasermanagementvorrichtung 7 als ein einstückiges Kunststoffspritzgussteil mit einer Ablageeinrichtung 1 und einer Kabelüberlängenablage 8. Es ist als ein Gehäuse mit Boden, Deckel und Seitenwänden gestaltet. In einer alternativen Ausführungsform könnte die Lichtleiterfasermanagementvorrichtung 7 jedoch auch als eine aus einer Mehrzahl gleichartiger Spleißkassetten gestaltet sein, die drehbar in einem Spleißmodul gelagert sind. Insbesondere in der geschnittenen Ansicht 5b ist zu erkennen, wie die Ablageeinrichtung 1 einstückig monolithisch mit der Lichtleiterfasermanagementvorrichtung 7 und damit auch mit der Kabelüberlängenablage 8 gestaltet ist. Die gesamte Lichtleiterfasermanagementvorrichtung 7 kann mit Hilfe eines Kunststoffspritzgussverfahrens in einem Verfahrensschritt produziert werden.

## Patentansprüche

1. Ablageeinrichtung (1) für Spleißschutzvorrichtungen (4, 5) für Lichtleiterfasern, die eine Mehrzahl Spleißschutzhalter (2, 3) aufweist,
wobei erste Spleißschutzhalter (2) zwei erste Wandabschnitte (21a, 21b) mit planen, zueinander parallel stehenden Innenseiten (22a, 22b) aufweisen und zweite Spleißschutzhalter (3) zweite Wandabschnitte (31a, 31b) mit zueinander geneigten Innenseiten (32a, 32b) aufweisen,
und die ersten Spleißschutzhalter (2) für die Aufnahme von ersten Spleißschutzvorrichtungen (4) ausgelegt sind, welche einen Querschnitt mit zueinander parallel stehenden Außenseiten aufweisen, und bei welcher die zweiten Spleißschutzhalter (3) für die Aufnahme von zweiten Spleißschutzvorrichtungen (5) ausgelegt sind, welche einen runden Querschnitt aufweisen, **dadurch gekennzeichnet, dass** die zweiten Wandabschnitte (31a, 31b) an erste Wandabschnitte (21a, 21b) anschließen, und zwar mit einem Ende (33a, 33b), welches in eine Richtung (-z) weist, in welcher eine Spleißschutzvorrichtung (4, 5) in die Ablageeinrichtung (1) abgelegt werden kann, und bei der eine erste Gruppe der zweiten Wandabschnitte (31a) relativ zu einer zweiten Gruppe der zweiten Wandabschnitte (31b) geneigt ist, wobei die zweiten Wandabschnitte (31a, 31b) entweder der ersten Gruppe oder der zweiten Gruppe angehören, und wobei jeder zweite Spleißschutzhalter (3) zumindest ein Mitglied beider Gruppen aufweist.

2. Ablageeinrichtung (1) nach Anspruch 1, bei welcher die Querschnitte der ersten Spleißschutzhalter (2) quer zu einer Faserrichtung (x) einer Spleißschutzvorrichtung (4, 5), für deren Ablage die Ablageeinrichtung (1) ausgelegt ist, jeweils zwei der ersten Wandabschnitte (21a, 21b) sowie einen diese verbindenden Bodenabschnitt (23) aufweisen, wobei der Bodenabschnitt (23) senkrecht zu den ersten Wandabschnitten (21a, 21b) angeordnet ist, und bei welcher eine Projektion eines der zweiten Spleißschutzhalter (3) in der Faserrichtung (x) in die Ebene des Querschnittes jeweils eine Innenseite (32a, 32b) von mindestens einem der zweiten Wandabschnitten (31a, 31b) und eine Oberseite (24) mindestens eines der ersten Wandabschnitte (21b) aufweist.

3. Ablageeinrichtung (1) nach einem der Ansprüche 1 und 2, bei der jeweils genau zwei der ersten Spleißschutzhalter (2) an genau einen der zweiten Spleißschutzhalter (3) anschließen,
wobei die ersten Spleißschutzhalter (2) zu dem zweiten Spleißschutzhalter (3) eine jeweilige Öffnung (25) und der zweite Spleißschutzhalter (3) an einer den ersten Spleißschutzhaltern (2) abgewandten Seite (+z) eine weitere Öffnung (34) jeweils für die Durchführung einer Spleißschutzvorrichtung (4, 5) aufweisen.

4. Ablageeinrichtung (1) nach einem der vorstehenden Ansprüche, bei der die zweiten Wandabschnitte (31a, 31b) bezogen auf ihre vertikale Ausdehnung (z) dünnwandig und bezogen auf eine Faserrichtung (x) einer Spleißschutzvorrichtung (4, 5), für deren Ablage die Ablageeinrichtung (1) ausgelegt ist, im Verhältnis zu den ersten Wandabschnitten (21a, 21b) kürzer sind, wobei die vertikale (z) diejenige lokale Richtung ist, welche parallel zu den Innenseiten (22a, 22b) der ersten Wandabschnitte (21a, 21b) und senkrecht zu der Faserrichtung (x) steht.

5. Ablageeinrichtung (1) nach einem der vorstehenden Ansprüche, bei welcher die ersten Spleißschutzhalter (2) für erste Spleißschutzvorrichtungen (4) mit Querschnittsabmessungen mit einer Breite zwischen 1,05 mm und 1,40 mm und mit einer Höhe zwischen 3,00 mm und 3,4 mm ausgelegt sind und die zweiten Spleißschutzhalter (3) für zweite Spleißschutzvorrichtungen (5) mit Querschnittsdurchmessern zwischen 2,4 mm und 2,8 mm ausgelegt sind.

6. Ablageeinrichtung (1) nach einem der vorstehenden Ansprüche mit einer in einem der ersten Spleißschutzhalter (2) abgelegten ersten Spleißschutzvorrichtung (4), bei welcher die vertikale Abmessung der Innenseiten (22a) der ersten Wandabschnitte (21a) mit jeweils einem anschließenden der zweiten Wandabschnitte (31a, 31b) mindestens 80 % der vertikalen Abmessung des Querschnittes der ersten Spleißschutzvorrichtung (4) entspricht,
wobei die vertikale diejenige lokale Richtung (z) ist, welche parallel zu den Innenseiten (22a, 22b) der ersten Wandabschnitte (21a, 21b) und senkrecht zu der Faserrichtung (x) der ersten Spleißschutzvorrichtung (2) steht.

7. Ablageeinrichtung (1) nach einem der vorstehenden Ansprüche, optional nach einem weiteren der vorstehenden Ansprüche, mit einer in einem der zweiten Spleißschutzhalter (3) abgelegten zweiten Spleißschutzvorrichtung (5), bei welcher derjenige zweite Spleißschutzhalter (3), in den die zweite Spleißschutzvorrichtung (5) abgelegt ist, in einer Projektion in eine Faserrichtung (x) der zweiten Spleißschutzvorrichtung (5) an drei Kontaktstellen (52) Kontakt mit der zweiten Spleißschutzvorrichtung (5) aufweist, nämlich an zwei der zweiten Wandabschnitte (31a, 31b) und einem der ersten Wandabschnitte (21b).

8. Ablageeinrichtung (1) nach Anspruch 7, bei welcher eine Mantelfläche der zweiten Spleißschutzvorrichtung in der Projektion durch die drei Kontaktstellen (52) in drei Segmente (53) unterteilt wird, wobei die Bogenlänge der Segmente (53) jeweils zwischen 26 % und 50 % des Umfangs der zweiten Spleißschutzvorrichtung (5) beträgt.

9. Ablageeinrichtung (1) nach einem der vorstehenden Ansprüche, bei welcher die ersten Spleißschutzhalter (2) für die Ablage von Crimpspleißschutzvorrichtungen (4) und die zweiten Spleißschutzhalter (3) für die Ablage von Schrumpfspleißschutzvorrichtungen (5) ausgelegt sind.

10. Ablageeinrichtung (1) nach einem der vorstehenden Ansprüche, bei welcher alle Spleißschutzhalter (2, 3) dafür ausgelegt sind, Spleißschutzvorrichtungen (4, 5) aufnehmen zu können, welche länger sind als eine Gesamtlänge der Ablageeinrichtung (1) in einer Faserrichtung (x) einer Spleißschutzvorrichtung (4, 5), für deren Ablage die Ablageeinrichtung (1) ausgelegt ist.

11. Ablageeinrichtung (1) nach einem der vorstehenden Ansprüche, bei welcher die Spleißschutzhalter (2, 3) in einer horizontalen Richtung (y) identisch repetitiv angeordnet sind,
wobei die horizontale diejenige lokale Richtung (y) ist, welche senkrecht zu den Innenseiten (22a, 22b) der ersten Wandabschnitte (21a, 21b) steht.

12. Lichtleiterfasermanagementvorrichtung (7), welche eine Ablageeinrichtung (1) nach einem der vorstehenden Ansprüche und eine Kabelüberlängenablage (8) aufweist, wobei die Ablageeinrichtung (1) vorzugsweise einstückig monolithisch mit der Kabelüberlängenablage (8) gestaltet ist.

13. Spleißmodul mit einer Mehrzahl gleichartiger Lichtleiterfasermanagementvorrichtungen (7) nach Anspruch 12, wobei die Lichtleiterfasermanagementvorrichtungen (7) drehbar gelagert mit dem Spleißmodul verbunden sind.

14. Verwendung einer Ablageeinrichtung (1) nach einem der Ansprüche 1 bis 11, einer Lichtleiterfasermanagementvorrichtung (7) nach Anspruch 12 oder eines Spleißmoduls nach Anspruch 13 zur Ablage von Spleißschutzvorrichtungen (4, 5), bei welcher Verwendung Schrumpfspleißschutzvorrichtungen (4) in die ersten Spleißschutzhalter (2) und Crimpspleißschutzvorrichtungen (5) in die zweiten Spleißschutzhalter (3) abgelegt werden.

## Claims

1. Depositing device (1) for splice protection devices (4, 5) for optical fibers, which has a plurality of splice protection holders (2, 3),
wherein first splice protection holders (2) have two first wall sections (21a, 21b) with flat, mutually parallel inner sides (22a, 22b) and second splice protection holders (3) have second wall sections (31a, 31b) with inner sides (32a, 32b) inclined towards each other,
and the first splice protection holders (2) are designed for receiving first splice protection devices (4) having a cross-section with outer sides parallel to one another, and in which the second splice protection holders (3) are designed for receiving second splice protection devices (5) having a round cross-section, **characterized in that** the second wall sections (31a, 31b) adjoin first wall sections (21a, 21b), specifically with an end (33a, 33b) pointing in a direction (-z) in which a splice protection device (4, 5) can be deposited in the depositing device (1),
and wherein a first group of the second wall portions (31a) is inclined relative to a second group of the second wall portions (31b), wherein the second wall portions (31a, 31b) belong to either the first group or the second group, and wherein each second splice protection holder (3) comprises at least one member of both groups.

2. Depositing device (1) according to claim 1, in which the cross-sections of the first splice protection holders (2) transversely to a fiber direction (x) of a splice protection device (4, 5), for the depositing of which the depositing device (1) is designed, each have two of the first wall sections (21a, 21b) and a base section (23) connecting these, the base section (23) being arranged perpendicular to the first wall sections (21a, 21b),
and in which a projection of one of the second splice protection holders (3) in the fiber direction (x) into the plane of the cross-section has a respective inner side (32a, 32b) of at least one of the second wall sections (31a, 31b) and a respective upper side (24) of at least one of the first wall sections (21b).

3. Depositing device (1) according to one of claims 1 and 2, in which in each case exactly two of the first splice protection holders (2) adjoin exactly one of the second splice protection holders (3),
wherein the first splice protection holders (2) have a respective opening (25) to the second splice protection holder (3) and the second splice protection holder (3) has a further opening (34) on a side (+z) facing away from the first splice protection holders (2), in each case for the feed-through of a splice protection device (4, 5).

4. Depositing device (1) according to one of the preceding claims, in which the second wall sections (31a, 31b) are thin-walled in relation to their vertical extent (z) and shorter in relation to the first wall sections (21a, 21b) in relation to a fiber direction (x) of a splice protection device (4, 5), for the depositing of which the depositing device (1) is designed,
wherein the vertical (z) is that local direction which is parallel to the inner sides (22a, 22b) of the first wall sections (21a, 21b) and perpendicular to the fiber direction (x).

5. Depositing device (1) according to one of the preceding claims, wherein the first splice protection holders (2) are designed for first splice protection devices (4) having cross-sectional dimensions with a width between 1.05 mm and 1.40 mm and with a height between 3.00 mm and 3.4 mm and the second splice protection holders (3) are designed for second splice protection devices (5) with cross-sectional diameters between 2.4 mm and 2.8 mm.

6. Depositing device (1) according to one of the preceding claims with a first splice protection device (4) deposited in one of the first splice protection holders (2), in which the vertical dimension of the inner sides (22a) of the first wall sections (21a) with a respective adjoining one of the second wall sections (31a, 31b) corresponds to at least 80% of the vertical dimension of the cross-section of the first splice protection device (4),
wherein the vertical is that local direction (z) which is parallel to the inner sides (22a, 22b) of the first wall portions (21a, 21b) and perpendicular to the fiber direction (x) of the first splice protection device (2).

7. Depositing device (1) according to one of the preceding claims, optionally according to a further one of the preceding claims, having a second splice protection device (5) deposited in one of the second splice protection holders (3), wherein that second splice protection holder (3) in which the second splice protection device (5) is deposited has contact with the second splice protection device (5) at three contact points (52) in a projection in a fiber direction (x) of the second splice protection device (5), namely at two of the second wall sections (31a, 31b) and one of the first wall sections (21b).

8. Depositing device (1) according to claim 7, in which a lateral surface of the second splice protection device is divided into three segments (53) in the projection by the three contact points (52), wherein the arc length of the segments (53) is in each case between 26% and 50% of the circumference of the second splice protection device (5).

9. Depositing device (1) according to one of the preceding claims, in which the first splice protection holders (2) are designed for depositing crimp splice protection devices (4) and the second splice protection holders (3) are designed for depositing shrink splice protection devices (5).

10. Depositing device (1) according to one of the preceding claims, in which all splice protection holders (2, 3) are designed to be able to accommodate splice protection devices (4, 5) being longer than a total length of the storage device (1) in a fiber direction (x) of a splice protection device (4, 5) for the storage of which the storage device (1) is designed.

11. Depositing device (1) according to one of the preceding claims, wherein the splice protection holders (2, 3) are arranged identically repetitively in a horizontal direction (y),
where the horizontal is that local direction (y) which is perpendicular to the inner sides (22a, 22b) of the first wall sections (21a, 21b).

12. Optical fiber management device (7), which has a deposit device (1) according to one of the preceding claims and a cable excess length deposit (8), wherein the deposit device (1) is preferably designed integrally monolithically with the cable excess length deposit (8).

13. Splice module with a plurality of similar optical fiber management devices (7) according to claim 12, wherein the optical fiber management devices (7) are connected to the splice module in a rotatably mounted manner.

14. Use of a depositing device (1) according to one of claims 1 to 11, an optical fiber management device (7) according to claim 12 or a splice module according to claim 13 for depositing splice protection devices (4, 5), in which use shrink splice protection devices (4) are deposited in the first splice protection holders (2) and crimp splice protection devices (5) are deposited in the second splice protection holders (3).

## Revendications

1. Dispositif récepteur (1) pour dispositifs de protection d'épissure (4, 5) de fibres optiques, qui présente une pluralité de supports de protection d'épissure (2, 3),
dans lequel des premiers supports de protection d'épissure (2) présentent deux premières parties formant parois (21a, 21b) pourvues de côtés intérieurs (22a, 22b) plats parallèles et des deuxièmes supports de protection d'épissure (3) présentent des deuxièmes parties formant parois (31a, 31b) pourvues de côtés intérieurs (32a, 32b) inclinés l'un vers l'autre,
et les premiers supports de protection d'épissure (2) sont conçus pour recevoir des premiers dispositifs de protection d'épissure (4) présentant une section transversale dont les côtés extérieurs sont parallèles, et les deuxièmes supports de protection d'épissure (3) sont conçus pour recevoir des deuxièmes dispositifs de protection d'épissure (5) de section transversale ronde ; **caractérisé en ce que** les deuxièmes parties formant parois (31a, 31b) font suite à des premières parties formant parois (21a, 21b), à savoir avec une extrémité (33a, 33b) orientée dans une direction (-z) dans laquelle un dispositif de protection d'épissure (4, 5) peut être reçu dans le dispositif récepteur (1), et un premier groupe de deuxièmes parties formant parois (31a) est incliné par rapport à un deuxième groupe de deuxièmes parties formant parois (31b), les deuxièmes parties formant parois (31a, 31b) appartenant soit au premier groupe, soit au deuxième groupe, et chacun des deuxièmes supports de protection d'épissure (3) présente au moins un membre des deux groupes.

2. Dispositif récepteur (1) selon la revendication 1, dans lequel les sections transversales des premiers supports de protection d'épissure (2) transversalement à la direction des fibres (x) d'un dispositif de protection d'épissure (4, 5), pour la réception duquel est conçu le dispositif récepteur (1), présentent chacune deux des premières parties formant parois (21a, 21b) ainsi qu'une partie de fond (23) les reliant, la partie de fond (23) étant disposée perpendiculairement aux premières parties formant parois (21a, 21b),
et dans lequel une projection de l'un des deuxièmes supports de protection d'épissure (3) dans la direction des fibres (x) dans le plan de la section transversale représente un côté intérieur (32a, 32b) respectif d'au moins une des deuxièmes parties formant parois (31a, 31b) et un côté supérieur (24) d'au moins une des premières parties formant parois (21b).

3. Dispositif récepteur (1) selon l'une des revendications 1 et 2, dans lequel exactement deux des premiers supports de protection d'épissure (2) font suite à exactement un des deuxièmes supports de protection d'épissure (3), dans lequel les premiers supports de protection d'épissure (2) présentent une ouverture (25) respective débouchant sur le deuxième support de protection d'épissure (3) et le deuxième support de protection d'épissure (3) présente, sur un côté (+z) détourné des premiers supports de protection d'épissure (2), une autre ouverture (34) destinée respectivement au passage d'un dispositif de protection d'épissure (4, 5).

4. Dispositif récepteur (1) selon l'une des revendications précédentes, dans lequel les deuxièmes parties formant parois (31a, 31b) sont à parois minces eu égard à leur étendue verticale (z) et sont plus courtes que les premières parties formant parois (21a, 21b) eu égard à la direction des fibres (x) d'un dispositif de protection d'épissure (4, 5) pour la réception duquel est conçu le dispositif récepteur (1),
la verticale (z) étant la direction locale qui est parallèle aux côtés intérieurs (22a, 22b) des premières parties formant parois (21a, 21b) et perpendiculaire à la direction des fibres (x).

5. Dispositif récepteur (1) selon l'une des revendications précédentes, dans lequel les premiers supports de protection d'épissure (2) sont conçus pour des premiers dispositifs de protection d'épissure (4) avec des dimensions de section transversale dont la largeur est comprise entre 1,05 et 1,40 mm et la hauteur entre 3,00 et 3,4 mm, et les deuxièmes supports de protection d'épissure (3) sont conçus pour des deuxièmes dispositifs de protection d'épissure (5) avec des diamètres de section transversale compris entre 2,4 et 2,8 mm.

6. Dispositif récepteur (1) selon l'une des revendications précédentes, comportant un premier dispositif de protection d'épissure (4) reçu dans l'un des premiers supports de protection d'épissure (2), la dimension verticale des côtés intérieurs (22a) des premières parties formant parois (21a) auxquels fait suite une deuxième partie formant paroi (31a, 31b) correspond à au moins 80 % de la dimension verticale de la section transversale du premier dispositif de protection d'épissure (4),
la verticale étant la direction (z) locale qui est parallèle aux côtés intérieurs (22a, 22b) des premières parties formant parois (21a, 21b) et perpendiculaire à la direction des fibres (x) du premier dispositif de protection d'épissure (2).

7. Dispositif récepteur (1) selon l'une des revendications précédentes, éventuellement selon une autre des revendications précédentes, comportant un deuxième dispositif de protection d'épissure (5) reçu dans l'un des deuxièmes supports de protection d'épissure (3), ledit deuxième support de protection d'épissure (3) dans lequel est reçu le deuxième dispositif de protection d'épissure (5) présente un contact avec le deuxième dispositif de protection d'épissure (5), dans une projection dans la direction des fibres (x) du deuxième dispositif de protection d'épissure (5), au niveau de trois points de contact (52), à savoir sur deux des deuxièmes parties formant parois (31a, 31b) et sur l'une des premières parties formant parois (21b).

8. Dispositif récepteur (1) selon la revendication 7, dans lequel une surface d'enveloppe du deuxième dispositif de protection d'épissure est divisée en trois segments (53), dans ladite projection passant par les trois points de contact (52), la longueur d'arc des segments (53) respectifs étant comprise entre 26 % et 50 % de la circonférence du deuxième dispositif de protection d'épissure (5).

9. Dispositif récepteur (1) selon l'une des revendications précédentes, dans lequel les premiers supports de protection d'épissure (2) sont conçus pour la réception de dispositifs de protection d'épissure par sertissage (4) et les deuxièmes supports de protection d'épissure (3) sont conçus pour la réception de dispositifs de protection d'épissure rétractables (5).

10. Dispositif récepteur (1) selon l'une des revendications précédentes, dans lequel tous les supports de protection d'épissure (2, 3) sont conçus pour pouvoir accueillir des dispositifs de protection d'épissure (4, 5) dont la longueur dépasse la longueur totale du dispositif récepteur (1) dans la direction des fibres (x) d'un dispositif de protection d'épissure (4, 5) pour la réception duquel est conçu le dispositif récepteur (1).

11. Dispositif récepteur (1) selon l'une des revendications précédentes, dans lequel les supports de protection d'épissure (2, 3) sont disposés de manière identique et répétée dans une direction horizontale (y),
l'horizontale étant la direction (y) locale qui est perpendiculaire aux côtés intérieurs (22a, 22b) des premières parties formant parois (21a, 21b).

12. Dispositif de gestion de fibres optiques (7), présentant un dispositif récepteur (1) selon l'une des revendications précédentes et un organe de réception des surlongueurs de câble (8), le dispositif récepteur (1) étant de préférence conçu d'une seule pièce de manière monolithique avec l'organe de réception des surlongueurs de câble (8).

13. Module d'épissage comportant une pluralité de dispositifs de gestion de fibres optiques (7) selon la revendication 12 similaires, lesdits dispositifs de gestion de fibres optiques (7) étant reliés au module d'épissage avec faculté de rotation.

14. Utilisation d'un dispositif récepteur (1) selon l'une des revendications 1 à 11, d'un dispositif de gestion de fibres optiques (7) selon la revendication 12 ou d'un module d'épissage selon la revendication 13 pour la réception de dispositifs de protection d'épissure (4, 5), dans le cadre de laquelle utilisation des dispositifs de protection d'épissure rétractables (4) sont reçus dans les premiers supports de protection d'épissure (2) et des dispositifs de protection d'épissure par sertissage (5) sont reçus dans les deuxièmes supports de protection d'épissure (3).
